# FASCICULE DE BREVET EUROPEEN

(11) **EP 0 958 634 B1**
(45) Date de publication et mention de la délivrance du brevet: **06.02.2002**
(21) Numéro de dépôt: 97924061.1
(22) Date de dépôt: 07.05.1997
(51) Int. Cl.: H01M 10/48, H01M 10/04

(54) **PROCEDE DE FABRICATION D'UN GENERATEUR ELEMENTAIRE DE PILE OU D'ACCUMULATEUR INTELLIGENT**
VERFAHREN ZUR HERSTELLUNG EINES INTELLIGENTEN ZELLEN- ODER AKKUMULATORELEMENTES
METHOD FOR MAKING A SMART BATTERY GENERATOR CELL

(30) Priorité: 07.05.1996 FR 9605881
(43) Date de publication de la demande: 24.11.1999
(73) Titulaire: TECHNOPUCE INTERNATIONAL, 54300 Luneville (FR)
(72) Inventeur: LEMAIRE, Philippe, F-54130 Dommartemont (FR); LEMAIRE, Gérard, F-54000 Nancy (FR); LORELLE, Patrick, F-88100 Saint Dié (FR); LIMPAS, Alain, F-54520 Laxou (FR)
(74) Mandataire: Kaspar, Jean-Georges
(86) Numéro de dépôt international: FR9700818
(87) Numéro de publication internationale: WO9742677

(56) Documents cités:
- EP-A- 0 350 235
- EP-A- 0 644 642
- WO-A-93/14612
- WO-A-96/08846
- FR-A- 2 654 553
- US-A- 3 793 078
- PATENT ABSTRACTS OF JAPAN vol. 009, no. 126 (E-318), 31 mai 1985 & JP 60 012679 A (MATSUSHITA DENKI SANGYO KK), 23 janvier 1985,

## Description

Dans le cadre d'études antérieures menées dans le domaine du marquage électronique et, plus particulièrement, celui de la lutte contre la démarque inconnue (brevet français déposé sous le numéro 93 15063) nous avons mis à l'évidence que les sources d'énergie, de type piles ou accumulateurs, disponibles sur le marché, ne correspondaient pas, la pupart du temps, au besoin des circuits électroniques mis en oeuvre.

Sources classiques d'énergie des équipements autonomes ou portatifs, les piles et accumulateurs sont loin de présenter les caractéristiques idéales pour l'alimentation des circuits électroniques modernes.
Leur tension varie fortement au cours de leur durée de vie, et on leur reproche, tout à la fois, leur capacité limitée, leur encombrement, leur poids, et leur coût d'utilisation.
On peut corriger la plupart de ces faiblesses à l'aide de montages judicieusement choisis, extérieurs à la pile ou à l'accumulateur (voir, à titre d'exemple, les brevets WO 94/00888, 0 457 569, ou 2 672 713).

Une autre difficulté, majeure, rencontrée, essentiellement, avec les accumulateurs, réside dans la maîtrise:
- de la quantité d'énergie disponible, à tout instant, dans un accumulateur,
- de la quantité d'énergie nécessaire pour le recharger,
- du contrôle et de l'estimation de la durée de vie totale de cet accumulateur, en fonction des conditions d'utilisation (nombre de cycles de charge et de décharge, température d'utilisation, appels de courant importants, fréquence des appels de courant...).

Cette difficulté de maîtrise du fonctionnement d'un accumulateur, et de la quantité d'énergie disponible, n'est toujours pas résolue de façon satisfaisante, à ce jour, et les solutions apportées à ce problème restent des solutions globales, extérieures à l'accumulateur (voir, à titre d'exemple, les brevets 0 644 642, WO 92/16979 ou WO 96/08846).

L'invention a pour objet l'intégration d'une intelligence, sous forme d'une, ou plusieurs, "puces" à l'intérieur même de chacun des générateurs élémentaires ou couples électrochimiques qui constituent un accumulateur, pour contrôler, directement sur chacun des éléments, les paramètres de ceux-ci et calculer en permanence "l'état de santé" instantané de l'accumulateur.

Par extension, l'invention permet aussi:
- de réaliser des piles intelligentes,
- de gérer des matrices de sources d'énergie,
- de créer une meilleure adéquation entre les moyens électroniques mis en oeuvre et la taille de la source d'énergie qui lui est associée dans le cadre de microsystèmes de très faible consommation.

Mais avant de poursuivre ce propos, il est, ici, nécessaire d'apporter les précisions suivantes:

Les piles électriques, conçues pour un usage unique, donc jetables, sont qualifiées de "générateurs primaires" en ce sens que l'énergie électrique qu'elles produisent y est introduite une fois pour toutes lors de leur fabrication, sous une forme chimique.

Celà par opposition aux "générateurs secondaires" que sont les accumulateurs, véritables réservoirs que l'on remplit lors de chaque recharge, à partir d'une source externe d'énergie électrique.

Concernant ces derniers, on parle, indifféremment, dans le langage courant, d'accumulateurs (ou "accus") et de batteries. Or, ce dernier terme est impropre car il désigne, en fait, tout assemblage de plusieurs éléments, que ce soit des piles ou des accumulateurs.

Par souci de clarté, dans le texte, nous utilisons:
- le terme "pile" pour désigner une batterie d'éléments primaires donc, non rechargeables,
- le terme "accumulateur" pour désigner une batterie d'éléments secondaires, donc rechargeables,
- le terme "générateur élémentaire" pour désigner un élément (ou couple électrochimique) d'accumulateur ou de pile, pouvant, en conséquence, être rechargeable ou non.

Il est connu en soi que les piles ou les accumulateurs sont constitués de plusieurs générateurs élémentaires identiques montés, de façon courante en série mais qui pourraient être disposés, aussi et sous réserve de certaines précautions, en parallèle.

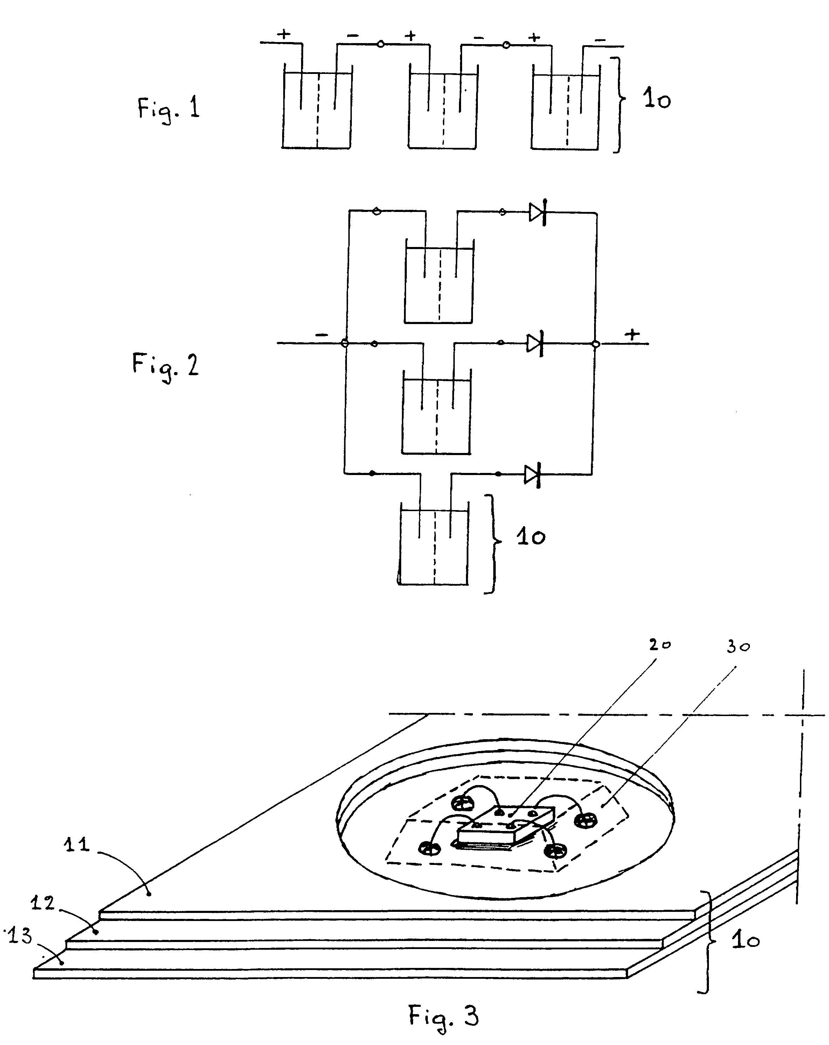

Voir les représentations schématiques de ces concepts dans les variantes série et parallèle (Fig.1 & 2) où 10 représente un générateur élémentaire.

Qu'il s'agisse de piles ou d'accumulateurs, à électrolyte liquide ou solide, à cathode polarisable ou non, à l'oxygène ou à un autre gaz, chaque générateur élémentaire est constitué d'une anode, d'une cathode, d'un électrolyte, d'un ou plusieurs séparateurs, d'un boîtier permettant de maintenir et protéger l'ensemble, et de deux connecteurs électriques extérieurs.

Il existe, aussi, des variantes de générateurs à circulation de gaz, circulation d'électrolyte, circulation d'eau de mer, mais, notre propos, ici, n'est pas de décrire tous les types de piles ou d'accumulateurs existants.

L'invention vise à intégrer, dans la construction d'un générateur élémentaire, rechargeable ou non, au sein même du couple électrochimique, une puce électronique auto-alimentée par le générateur, destinée à remplir diverses fonctions comme, à titre d'exemples non exhaustifs;
- contrôler la tension de sortie du générateur élémentaire,
- contrôler le courant traversant le générateur élémentaire,
- surveiller un ou plusieurs paramètres (température, PH, ...),
- calculer les énergies entrées ou sorties,
- mémoriser les résultats,
- transmettre des données vers un système centralisé de gestion,
- ou bien, simplement, réaliser une microsource d'énergie, rechargeable ou non.

Ces points font l'objet de brevets antérieurs (voir, par exemple,les brevets 0 350 235, WO 93/14612 ou WO 95/12901) mais, dans tous les cas de figure, et comme indiqué plus haut , le montage de l'électronique et l'assemblage du générateur sont dissociés car les contraintes d'assemblage du microsystème et celles de la microsource d'énergie sont, dans certains cas antinomiques.

Par exemple, dans le cas particulier d'une pile ou d'un accumulateur au Lithium, le dépôt de Lithium doit se faire en atmosphère inerte et anhydre, alors que la soudure et le câblage de la puce, pour des raisons de protection contre l'électricité statique, se font en atmosphère humide (50% à 60% d'humidité).

Il en est de même pour les conditions de moulage transfert de l'enrobage du composant (haute température et haute pression) et pour les problèmes d'étanchéité et d'isolation électrique posés par la juxtaposition d'une puce électronique et de l'électrolyte liquide.

Certains brevets suggèrent de positionner l'électronique "à l'intérieur de la pile ou de l'accumulateur". Le brevet 0 644 642, qui donne plus de précisions à ce sujet, positionne le circuit électronique sur une surface plate, dans l'espace resté disponible entre l'intérieur du boîtier et le générateur élémentaire et, tout au plus, page 4, lignes 51 à 57, mentionne, en le déconseillant, l'éventualité d'intégrer ce circuit électronique au sein des matériaux constituant le générateur élementaire.

L'invention propose un procédé d'interconnexion d'un générateur élémentaire de pile ou d'accumulateur avec un circuit électronique intelligent (20) - composé d'un, ou plusieurs, composants électroniques, actifs ou passifs, sous forme de "puces" - alimenté en énergie par le générateur élémentaire de pile ou d'accumulateur, et
caractérisé en ce que ce circuit électronique (20) est assemblé à l'intérieur même de la structure (10) du couple électrochimique formant le générateur élémentaire de pile ou d'accumulateur et est situé, de préférence, sur le collecteur de courant de l'anode (11), ou sur le collecteur de courant de la cathode (13) de ce couple électrochimique (Fig.3).

A l'inverse, l'invention peut être considérée comme l'assemblage, sur le support de microélectronique, des produits actifs du générateur élémentaire de pile ou d'accumulateur, destiné à alimenter cette électronique.

Ainsi, le support sur lequel est monté la puce sert, aussi, de préference, de collecteur de courant dans l'anode ou la cathode de l'élément du générateur et, inversement, la puce est installée directement sur l'un ou l'autre des collecteurs de courant du générateur.

Cependant, un produit où la puce serait montée sur un autre élément du générateur comme, par exemple, un séparateur, resterait du domaine de l'invention.

De même, on ne sort pas du domaine de l'invention si la puce est remplacée par plusieurs composants, actifs ou passifs.

L'invention sera mieux comprise grâce à la description qui va suivre donnée à titre d'exemple non limitatif en réference aux dessins annexés dans lesquels:
- les figures 1 et 2 schématisent le montage série (Fig.1) et parallèle (Fig.2) de trois générateurs élémentaires (10),
- la figure 3 représente l'assemblage d'un composant électronique (20) dans la structure d'un générateur élémentaire (10) où (11) et (13) sont l'anode ou la cathode (ou inversement) de ce générateur, (12) est l'électrolyte liquide ou solide, avec son séparateur (non représenté), (20) est une "puce" directement soudée sur (13), et (30) est la protection mécanique, électrique et étanche de la "puce" de préference par moulage transfert d'une résine époxy "faibles contraintes".

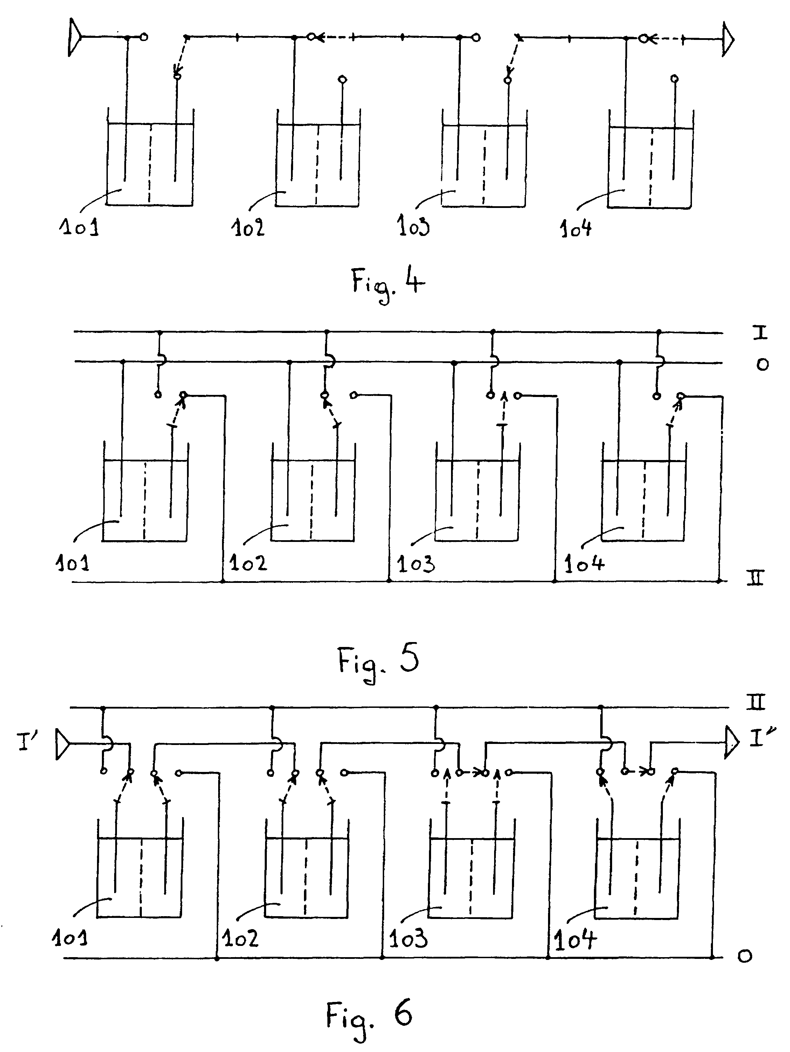

- la figure 4 représente un montage en série de quatre éléments où l'on constate que les générateurs élémentaires (101) et (103) sont effectivement connectés en série, tandis que les générateurs élémentaires (102) et (104) sont en attente soit comme réserve d'énergie soit pour cause de dysfonctionnement.
- la figure 5 représente un montage en parallèle de quatre éléments où l'on constate que les générateurs élémentaires (101) et (104) sont connectés en parallèle entre les lignes (0) et (II), tandis que le générateur élémentaire (102) est connecté en parallèle entre les lignes (0) et (I) et que le générateur élémentaire (103) est en attente soit comme réserve d'énergie soit pour cause de dysfonctionnement.

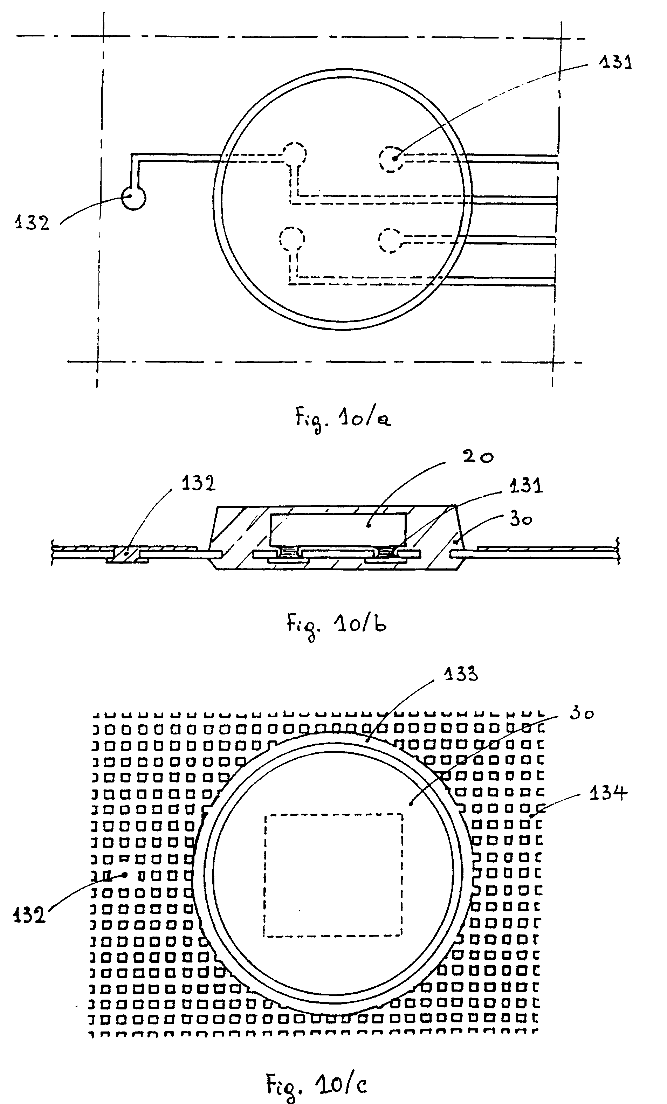

Cette source d'énergie est donc dissociée en deux lignes de fourniture d'énergie,

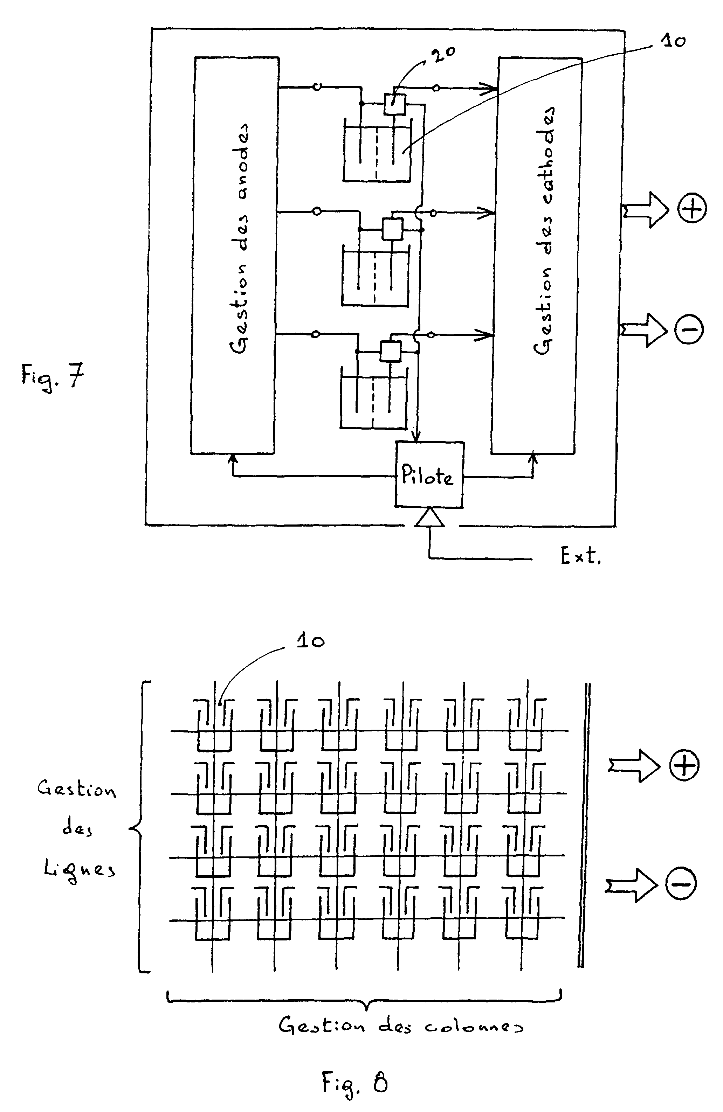

- la figure 6 représente un montage mixte de quatre éléments où l'on constate que les générateurs élémentaires (101) et (102) sont connectés en série entre les points (I') et (I") de la ligne (I), tandis que le générateur élémentaire (104) est connecté en parallèle entre les lignes (0) et (II) et que le générateur élémentaire (103) est en attente soit comme réserve d'énergie soit pour cause de dysfonctionnement,

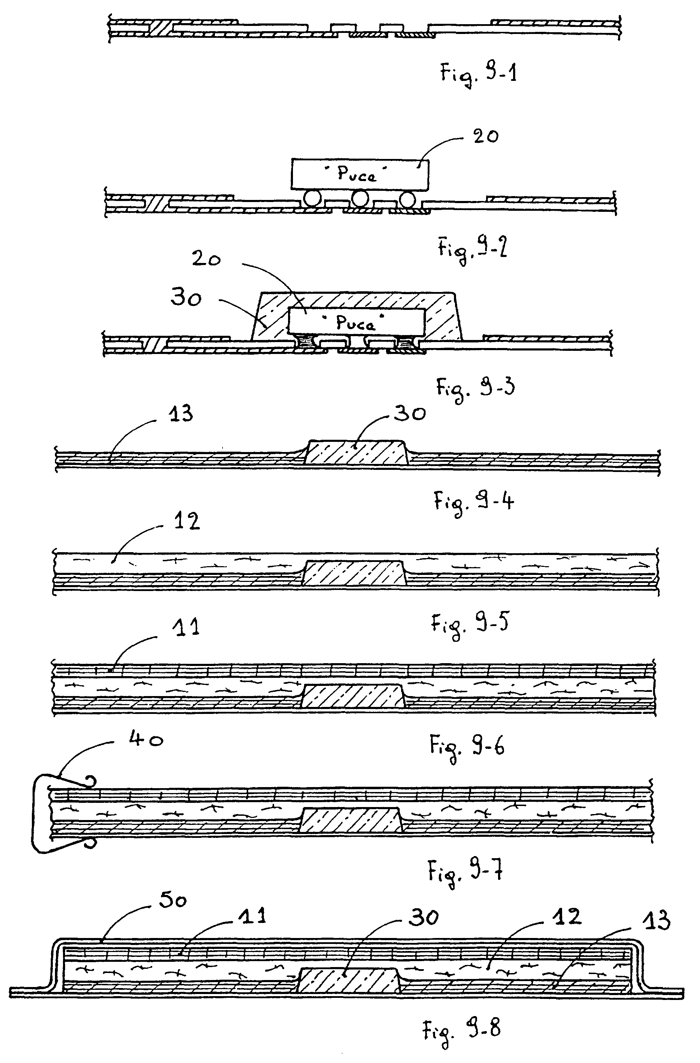

- la figure 7 représente une batterie de trois générateurs élémentaires (10), chacun équipé d'un composant intelligent (20) dans une structure de gestion automatique de la source d'énergie,
- la figure 8 représente une matrice de vingt quatre générateurs élémentaires intelligents (10), dans une structure de répartition automatique, de la totalité, ou d'une partie des sources d'énergie, vers un ou plusieurs points d'utilisation,
- les figures 9/1 à 9/8 représentent différentes phases d'un mode préferentiel d'assemblage d'un ou plusieurs composants électroniques, sous forme de "puce", directement sur le collecteur de courant de l'anode ou de la cathode du générateur élémentaire, l'annexe "Procédé de Fabrication", page 12, explique les phases du mode preferentiel d'assemblage décrit en figure 9,
- enfin, les figures 10/a à 10/c représentent la vue de dessous, la vue en coupe, la vue de dessus et les connexions électriques entre la puce et le couple électrochimique d'un autre mode d'assemblage.

L'objet de l'invention est le procédé d'assemblage d'une puce sur un générateur élémentaire de pile ou d'accumulateur afin de constituer un "générateur élémentaire intelligent" rechargeable ou non.

Le procédé de fabrication s'explique de lui-même par les commentaires 9/1 à 9/8 de l'annexe "Procédé de Fabrication" et les différentes coupes de la planche 4/5, qui permettent de visualiser les grandes étapes d'assemblage où:
- (20) représente le composant,
- (30) représente la protection mécanique, électrique et étanche du composant,
- (40) représente schématiquement le renvoi électrique de l'élément (11) vers la face inférieure du substrat,
- (11),(12) et (13) représentent l'anode, l'électrolyte et son séparateur et la cathode du générateur élémentaire.
- (50) représente le boîtier extérieur du générateur.
- Les connexions électriques externes, connues en soi ne sont pas représentées.

Il faut surtout-retenir que le procédé de fabrication n'est donné qu'à titre d'exemple, dans un souci de clarification de l'invention mais qu'il existe d'autres méthodes pour obtenir la même finalité.

En particulier, afin de conserver un encombrement minimum et de réaliser, simultanément, la fixation de la puce et sa connexion électrique,nous avons choisi de retourner la puce sur son support et de faire les connexions par micro-billes (Fig.9-2).

Le principe de l'invention ne serait pas changé si l'on devait choisir de fixer la puce par sa face arrière et de réaliser le câblage par fil or ou aluminium (Fig.3).

Il en serait de même si, pour des raisons techniques, nous devions utiliser plusieurs composants, au lieu d'une seule et même puce.

La connexion électrique par "pince à dessin" (40) de la figure 9-7 est schématique. Elle peut se faire par contact électrique, par dépôt sous vide ou par pliage d'un même substrat/collecteur de courant, dont un moitié serait l'anode et l'autre moitié serait la cathode, ...

Notre exemple est donné pour un élément multicouches où nous n'avons pas précisé si l'électrolyte était liquide ou solide car, mis à part l'aspect étanchéité de l'encapsulage final, le procédé d'assemblage n'est pas affecté.

L'utilisation d'une cathode à air (ex: pile Zinc/Air), par contre, modifie sensiblement l'ordre de déroulement du procédé d'assemblage mais ne remet pas en cause le principe de l'invention.

De façon arbitraire, notre puce et son support comportent quatre contacts (131) dont deux pour la fourniture d'énergie, un pour envoyer un paramètre de contrôle (température, tension, courant,...) et un contact pour recevoir une instruction de correction.

Voir la figure 10 où;
- La fig. 10/a représente la face inférieure du collecteur de courant de la cathode (ou de l'anode) sur laquelle on distingue quatre plots métallisés (131) servant à la connexion de la puce et un trou métallisé non débouchant (132), servant au renvoi du contact de cathode (ou d'anode) de part et d'autre du support de collecteur,
- La fig. 10/b représente, en coupe, les principes de connexion (131) de la puce (20), de trou métallisé (132), d'encapsulage par résine transfert (30).
   On remarque, sur cette figure, que, contrairement à la figure 9, le moulage transfert a été fait, de façon connue en soi, de part et d'autre du support de collecteur afin d'assurer une meilleure tenue mécanique et une meilleure étanchéité.
- La fig.10/c représente la face supérieure du collecteur de courant où l'on distingue une zone circulaire dégagée, non conductrice (133) sur laquelle vient s'accrocher la résine transfert de protection de la puce (30) et une zone dessinée, conductrice (134) constituant le collecteur de courant, proprement dit, sur lequel on vient déposer les matériaux actifs de la cathode (ou de l'anode).

En réalité, le nombre de contacts de la puce n'est pas limité car il dépend du nombre de paramètres du générateur élémentaire, que l'on veut contrôler, et de la complexité de l'électronique que l'on a installée.

Le nombre minimum, par contre, est de trois contacts, dans le cas d'une cellule autogérée sans aucune interconnexion, ni avec les cellules adjacentes, ni avec l'extérieur de la batterie (Ex. régulateur de tension, générateur de courant, de pulses ...)

Le nombre de connexions de la pile ou de l'accumulateur est de deux, au minimum, pour l'anode et la cathode, sachant que dans certains cas, la connexion d'anode ou celle de la cathode peut aussi être utilisée pour transporter le signal de contrôle qui est, alors, superposé au signal de fourniture d'énergie.

Par souci de clarté, nous avons choisi un collecteur de courant muticouches constitué d'un support isolant et d'une impression conductrice (ou métallisation) sur chaque face.

De façon connue en soi, sur un collecteur de courant uniformément conducteur, il est nécessaire de déposer une couche intermédiaire isolante (de type Kapton, par exemple) pour isoler les composants électroniques des éléments actifs du générateur élémentaire et constituer les différentes connexions.

Selon l'angle sous lequel on considère l'invention, trois grands types d'applications industrielles se dégagent clairement:

### - les piles et accumulateurs intelligents

Dans le cas d'une batterie, rechargeable ou non, comportant une série de générateurs élémentaire juxtaposés selon la Fig. 1 ou la Fig. 2, la présence d'une puce intelligente sur chaque générateur élémentaire permet:
- de surveiller les paramètres essentiels de fonctionnement de chacun des générateurs,
- d'intervenir séparément sur la fourniture d'énergie de chacun de ces générateurs et donc, de gérer globalement la source d'énergie.

Les figures 4, 5 et 6 représentent des exemples non exhaustifs de gestion de sources d'énergie en "tout ou rien".Les connexions sont, en réalité, réalisées par l'élément intelligent de chaque générateur élémentaire en fonction des paramètres propres du générateur lui-même ou d'instructions fournies par le milieu extérieur à chaque élément intelligent.

Le procédé selon l'invention permet donc d'identifier, à tout moment, chaque générateur élémentaire et d'en attribuer son utilisation, série ou parallèle, vers un point ou un autre, sans que cette attribution soit définitive.

Le procédé selon l'invention, permet aussi de gérer certains défauts bien connus.

Sans être limitatifs, nous pouvons citer, pour exemples:
- Sur tous les véhicules ayant une "batterie", on contrôle le courant de charge global de l'accumulateur ce qui préjuge d'un bon fonctionnement global de cette "batterie" mais ne permet pas de prévoir une panne prochaine suite à la défaillance d'un seul des générateurs élémentaires, ni même de connaître la quantité d'énergie effectivement disponible dans la "batterie". Le contrôle, élément par élément, permet de gérer ce type de situation.
- De la même façon, un accumulateur pourra être équipé d'un avertisseur de décharge qui se déclenchera non plus sur une valeur de tension globale mais sur le fait qu'un des éléments a atteint le seuil de décharge à ne pas dépasser, même si le bon fonctionnements des autres éléments camoufle ce dysfonctionnement local.
- Dans le cas d'une utilisation dans les pays nordiques (basses températures), les accumulateurs peuvent être équipés d'un système de préchauffage auto-alimenté qui sera déclenché par l'un, au moins, des éléments intelligents interdisant la fourniture d'énergie au démarreur jusqu'à ce que tous les éléments de l'accumulateur et l'électrolyte aient atteint la bonne température pour fournir le maximum d'énergie électrique.
   Un signal de préchauffage des éléments, semblable ou couplé au voyant de préchauffage bougie des moteurs diesel, peut être envoyé directement, du générateur, sur le tableau de bord du véhicule.
- De même, un chargeur pourra contrôler l'état de charge exact d'un accumulateur grâce à la détection simultanée, par élément, de la dérivée de la courbe dé tension, de la dérivée de la courbe de température et de la différentielle entre l'énergie fournie et l'énergie restituée au niveau de chaque élément ...

### - La gestion de matrices de cellules élémentaires

Les exemples précédents s'appliquent à des "batteries", rechargeables ou non, comportant un nombre limité de générateurs élémentaires.

Dans le cas de la mise en oeuvre d'un nombre important de générateurs élémentaires, comme les "batteries" pour véhicule électrique, toutes les petites imperfections de fonctionnement citées ci-dessus (et les autres ...) sont multipliées par le nombre d'éléments et deviennent, alors, intolérables (Par exemple, l'allumage des phares ne doit pas faire chuter la vitese du véhicule, la mise en panne d'un élément doit être signalée mais ne doit pas générer une panne complète, ...).

Le fait d'équiper les générateurs élémentaires d'une intelligence permet de contrôler où, quand, et comment chaque générateur distribue de l'énergie, dans une structure conçue à cet effet.

La figure 7 schématise l'architecture d'un système de gestion à trois générateurs élémentaires et de la distribution, à tout instant, du courant disponible vers une source d'utilisation en fonction d'un pilote qui gère les informations provenant de ces générateurs et tient compte d'éventuels éléments extérieurs.

Par un tel procédé, il est alors possible de connecter ou de déconnecter un des générateurs tout en garantissant la fourniture globale d'énergie, dans la mesure, bien entendu, où l'on dispose d'éléments redondants pour suppléer aux éléments défaillants ou apporter un complément d'énergie.

Dans une configuration matricielle plus générale, il devient possible de répartir l'utilisation des différents générateurs vers un ou plusieurs points d'utilisation d'énergie distincts et de redistribuer ces générateurs au fur et à mesure de la demande en fonction des besoins du moment.

Tout ou partie de la matrice peut être attribuée, de façon évolutive, à tout ou partie des points d'utilisation d'énergie.

Dans la figure 8, on comprend qu'un microprocesseur est parfaitement en mesure de gérer une telle matrice en scrutant les générateurs à tour de rôle et d'utiliser les informations ainsi récupérées pour organiser la répartition des sources d'énergie.

Dans un tel système on peut même envisager que certains générateurs soient en cours de recharge, tandis que certains sont inactifs et que d'autres débitent de l'énergie, chaque générateur étant piloté individuellement.

### - Les microsources d'énergie

On constate, aujourd'hui, une inadéquation entre, les composants électroniques,qui ont fait d'énormes progrès ces vingt dernières années, en terme de miniaturisation, réduction des coûts, réduction des consommations, et les sources d'énergie électrique qui, durant ce même laps de temps, se sont, simplement, fiabilisées.

Nous nous trouvons donc, maintenant, dans la situation inverse à celle dans laquelle nous étions queques dizaines d'années auparavant, à savoir que:
- l'électronique est de faible encombrement, de faible consommation et de faible coût,
- les sources d'énergie sont souvent surdimensionnées en termes de:
   - trop d'énergie embarquée,
   - trop de volume,
   - trop de poids,
   - prix excessif comparé au prix d'une "puce".
et, concernant cette dernière remarque, il est intéressant de constater que le prix d'une pile n'est pas lié à la quantité de matériaux actifs présents dans celle-ci, mais, beaucoup plus, au coût du boîtier lui-même et de son assemblage.

Comme l'allumette que l'on jette après usage, le microsystème comporte une microsource d'énergie exactement adaptée à son besoin et à sa durée de vie.

Dans ce microsystème, la "puce" ne se contente pas de gérer la microsource d'énergie, mais intègre toutes les fonctionnalités électroniques du microsystème.

Dans le cas de l'exemple du brevet français N° 93 15063 mentionné au début, une étiquette électronique anti-vol utilise une microsource d'énergie aux caractéristiques suivantes;
- élément de pile semi-rigide (au Lithium, par exemple)
- tension d'alimentation: 3V
- courant de veille: 1 microampère
- courant de fonctionnement: 20 milliampères
- durée de fonctionnement: 10 secondes
- période de vigilance (durée de vie du produit): 3 ans
- coût du produit, avec source d'énergie: quelques FF
- épaisseur maxi: 500 microns
- surface active: 3x2cm = 6cm 2
- quantité d'énergie embarquée: 27 millampères/Heure
L'ensemble du produit se limite donc à quelques cm2, et la source d'énergie prend, à peine, plus de place que l'électronique.

Ce même produit, dans le cadre d'une autre application où le courant de veille est nul, comporte un élément de pile identique mais dont la surface est réduite au minimum réalisable, compte tenu que la quantité d'énergie à embarquer est 375 fois plus petite (la surface utile de la source d'énergie est inférieure à 2 mm2 - sa dimension ne dépend alors que de son aptitude à fournir le pic d'énergie nécessaire!).
La source d'énergie est, alors, de la même taille que celle de l'électronique.
Par contre, on ne sortirait pas de l'invention si le microsytème était équipé d'une microsource d'énergie rechargeable, ou télérechargeable, pour permettre de reconstituer la réserve d'énergie initiale.

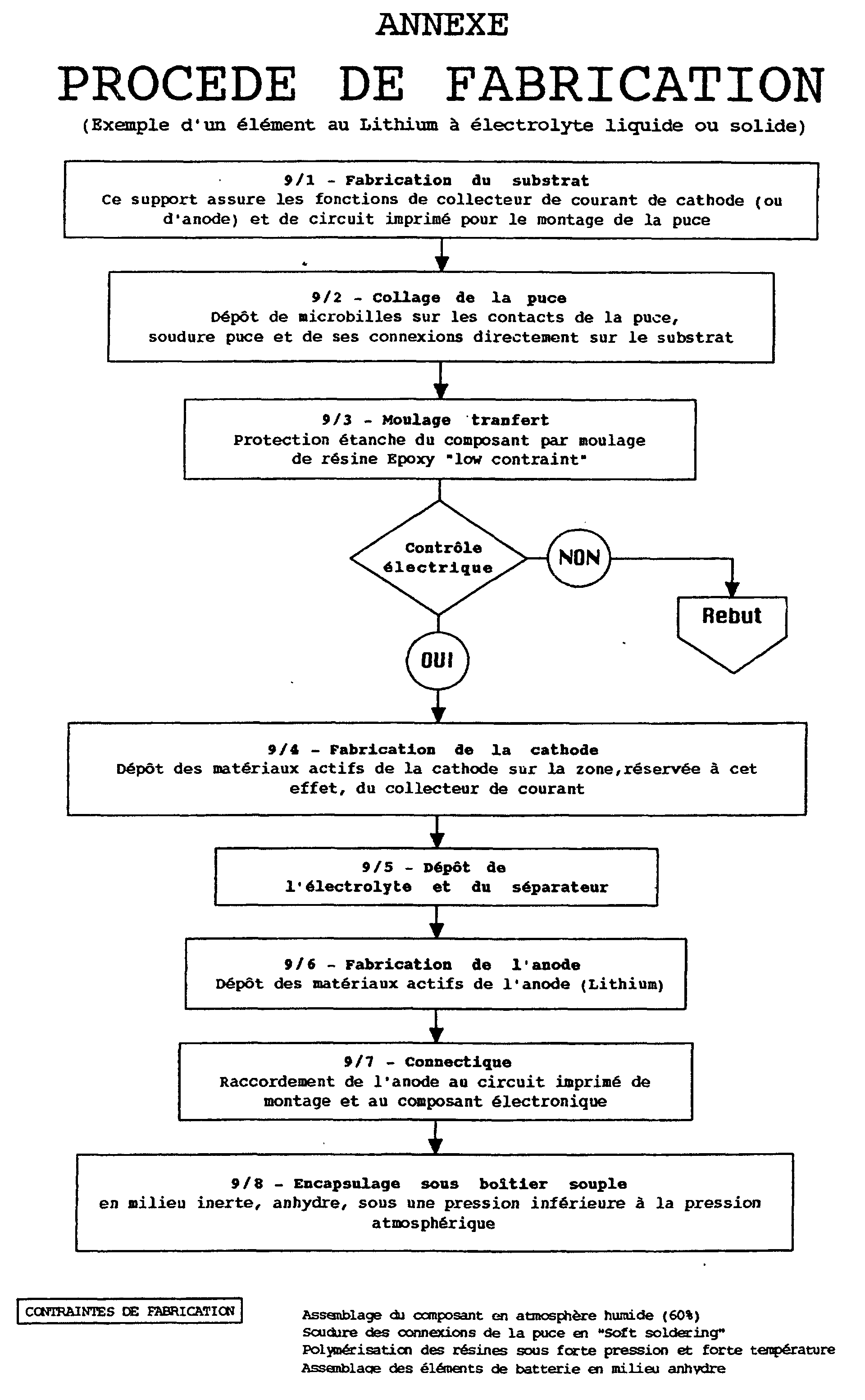

## Revendications

1. Procédé d'interconnexion d'un générateur élémentaire de pile ou d'accumulateur avec un circuit électronique intelligent (20), composé d'un, ou plusieurs, composants électroniques, actifs ou passifs, sous forme de "puces", alimenté en énergie par le générateur élémentaire de pile ou d'accumulateur, **caractérisé en ce que** ce circuit électronique (20) est assemblé à l'intérieur même de la structure (10) du couple électrochimique formant le générateur élémentaire de pile ou d'accumulateur et est situé, sur le collecteur de courant de l'anode (11), ou sur le collecteur de courant de la cathode (13) de ce couple électrochimique.

2. Procédé selon la revendication précédente, **caractérisé en ce que** la connexion d'anode ou de cathode (132), de l'élément de pile ou d'accumulateur est aussi utilisée pour transporter le signal de contrôle qui se trouve, alors, superposé au signal de fourniture d'énergie.

3. Procédé selon l'une quelconque des revendications précédentes **caractérisé en ce qu'**il s'applique à tout type de pile ou d'accumulateur et à tout type de couple électrochimique rechargeable ou non.

4. Procédé selon l'une quelconque des revendications précédentes **caractérisé en ce que** le circuit électronique (20) est assemblé sur la zone conductrice (134), du couple électrochimique (10), constituant le collecteur de courant, proprement dit, de l'anode (11), ou de la cathode (13), sur lequel on vient déposer les matériaux actifs de la cathode ou de l'anode.

5. Procédé selon l'une quelconque des revendications 1) à 4) **caractérisé en ce qu'**il est utilisé pour réaliser une pluralité de couples électrochimiques intelligents et constituer, ainsi, une batterie de piles ou d'accumulateurs, intelligente, pouvant intégrer une électronique de gestion de la pluralité des couples électrochimiques intelligents.

6. Procédé selon l'une quelconque des revendications 1) à 4) **caractérisé en ce qu'**il est utilisé pour réaliser une matrice de générateurs élémentaires, de piles ou d'accumulateurs, de technologies identiques ou différentes, permettant de gérer, dans un contexte global, les paramètres et conditions d'utilisation de chaque générateur, ou groupe de générateurs élémentaires.

7. Procédé selon l'une quelconque des revendications précédentes, **caractérisé en ce que** les connexions d'anode ou de cathode, de la batterie de piles ou d'accumulateurs, sont aussi utilisées pour transporter les signaux de contrôle qui se trouvent, alors, superposés au signal de fourniture d'énergie.

8. Procédé selon l'une des revendications 1) et 3), **caractérisé en ce qu'**il est utilisé pour réaliser une microsource d'énergie, rechargeable ou non, indissociable et exactement adaptée au microsytème pour lequel cette microsource est conçue.

9. Procédé selon l'une quelconque des revendications précédentes, **caractérisé en ce que** les éléments intelligents insérés dans l'accumulateur comptabilisent la quantité d'énergie que celui-ci a fournie, ou qui lui a été restituée, afin de déterminer, à tout moment, la capacité réelle de l'accumulateur.

10. Procédé selon l'une quelconque des revendications précédentes, **caractérisé en ce que** les éléments intelligents insérés dans la pile comptabilisent la quantité d'énergie que celle-ci a fournie afin de déterminer, à tout moment, sa capacité résiduelle.

## Patentansprüche

1. Verfahren zum Anschließen eines Galvanikzellen- oder Akkumulatorgenerators an eine intelligente elektronische Schaltung (20), die aus einem oder mehreren aktiven oder passiven elektronischen Bauteilen in Form von "Chips" besteht und über den Galvanikzellen- oder Akkumulatorgenerator mit Energie versorgt wird, **dadurch gekennzeichnet, daß** diese elektronische Schaltung (20) ganz im Inneren der Struktur (10) des galvanischen Elementes, das den Galvanikzellen- oder Akkumulatorgenerator bildet, montiert und am Stromabnehmer der Anode (11) oder am Stromabnehmer der Kathode (13) dieses galvanischen Elementes angeordnet ist.

2. Verfahren nach dem vorhergehenden Anspruch, **dadurch gekennzeichnet, daß** der Anoden- oder Kathodenanschluß (132) des Galvanikzellen- oder Akkumulatorgenerators auch zur Übertragung des Steuersignals verwendet wird, das dabei dem Energieabgabesignal überlagert wird.

3. Verfahren nach einem der vorhergehenden Ansprüche, **dadurch gekennzeichnet, daß** es auf jede Art von Galvanikzelle oder Akkumulator und auf jede Art eines gegebenenfalls wiederaufladbaren galvanischen Elementes anwendbar ist.

4. Verfahren nach einem der vorhergehenden Ansprüche, **dadurch gekennzeichnet, daß** die elektronische Schaltung (20) auf dem leitfähigen Bereich (134) des galvanischen Elementes (10) montiert ist, der den eigentlichen Stromabnehmer der Anode (11) oder der Kathode (13) bildet, auf dem die aktiven Materialien der Kathode oder Anode abgelagert werden sollen.

5. Verfahren nach einem der Ansprüche 1 bis 4, **dadurch gekennzeichnet, daß** es zur Herstellung mehrerer intelligenter galvanischer Elemente und damit zur Ausbildung einer intelligenten Galvanikzellen- oder Akkumulator-Batterie eingesetzt wird, die eine Elektronik zur Steuerung der mehreren intelligenten galvanischen Elemente aufweisen kann.

6. Verfahren nach einem der Ansprüche 1 bis 4, **dadurch gekennzeichnet, daß** es zum Herstellen einer Matrix von Galvanikzellen- oder Akkumulatorgeneratoren mit gleicher oder unterschiedlicher Technologie eingesetzt wird, die es gestatten, die Parameter und Bedingungen der Verwendung jedes Generators oder jeder Gruppe von Generatorzellen allgemein zu steuern.

7. Verfahren nach einem der vorhergehenden Ansprüche, **dadurch gekennzeichnet, daß** die Anoden- oder Kathodenanschlüsse der Galvanik- oder Akkumulatorzellen auch zum Übertragen der Steuersignale dienen, die dabei dem Energieabgabesignal überlagert werden.

8. Verfahren nach einem der Ansprüche 1 und 3, **dadurch gekennzeichnet, daß** es zum Herstellen einer gegebenenfalls wiederaufladbaren Mini-Energiequelle dient, die untrennbar von einem und genau angepaßt an ein Mini-System ist, für das diese Mini-Energiequelle vorgesehen ist.

9. Verfahren nach einem der vorhergehenden Ansprüche, **dadurch gekennzeichnet, daß** die in einen Akkumulator eingesetzten intelligenten Elemente die Energiemenge erfassen, die von dem Akkumulator abgegeben oder diesem zugeführt wurde, um jederzeit die tatsächliche Kapazität des Akkumulators zu bestimmen.

10. Verfahren nach einem der vorhergehenden Ansprüche, **dadurch gekennzeichnet, daß** die in die Zelle eingesetzten intelligenten Elemente die Energiemenge erfassen, die von der Zelle abgegeben wurde, um jederzeit deren verbleibende Kapazität zu bestimmen.

## Claims

1. A process for interconnecting a generator cell for a primary or secondary battery with a "smart" electronic circuit (20), composed of one or more electronic components, whether active or passive, in the form of "chips", supplied with energy by the generator cell for the battery, **characterised in that** this electronic circuit (20) is assembled within the structure (10) of the electrochemical couple forming the generator cell for the battery and is located on the current collector of the anode (11) or on the current collector of the cathode (13) of this electrochemical couple.

2. A process according to the preceding claim, **characterised in that** the anode or cathode connection (132) of the battery element is also used to transport the control signal which is then superposed on the energy supply signal.

3. A process according to any one of the preceding claims, **characterised in that** it is applied to any type of battery and to any type of electrochemical couple, whether rechargeable or not.

4. A process according to any one of the preceding claims, **characterised in that** the electronic circuit (20) is assembled on the conductive zone (134) of the electrochemical couple (10) constituting the current collector proper of the anode (11) or of the cathode (13), on which the active materials of the cathode or of the anode are deposited.

5. A process according to any one of Claims 1 to 4, **characterised in that** it is used to produce a plurality of smart electrochemical couples and thus constitute a smart battery assembly capable of integrating management electronics for the plurality of smart electrochemical couples.

6. A process according to any one of Claims 1 to 4, **characterised in that** it is used to produce a matrix of generator cells, for batteries, of identical or different technologies, making it possible to manage, in an overall context, the parameters and conditions of use of each generator, or group of generator cells.

7. A process according to any one of the preceding claims, **characterised in that** the anode or cathode connections of the battery assembly are also used to transport the control signals which are then superposed on the energy supply signal.

8. A process according to one of Claims 1 and 3, **characterised in that** it is used to produce an energy microsource, whether rechargeable or not, which is indissociable and exactly adapted to the microsystem for which this microsource is designed.

9. A process according to any one of the preceding claims, **characterised in that** the smart elements inserted into the secondary cell calculate the quantity of energy which the latter has supplied, or which has been restored thereto, in order to determine, at any time, the true capacity of the secondary cell.

10. A process according to any one of the preceding claims, **characterised in that** the smart elements inserted into the primary cell calculate the amount of energy which the latter has provided in order to determine, at any time, its residual capacity.
